# FASCICULE DE BREVET EUROPEEN

(11) **EP 0 630 600 B1**
(45) Date de publication et mention de la délivrance du brevet: **09.04.1997**
(21) Numéro de dépôt: 94401262.4
(22) Date de dépôt: 07.06.1994
(51) Int. Cl.: A47C 17/84, B62D 33/06, B63B 29/10

(54) **Structure de lit ou de couchette escamotable dans un plafond**
In einer Decke einklappbare Bett- oder Schlafliege-Struktur
A bed or sleeping berth structure retractable in a ceiling

(30) Priorité: 25.06.1993 FR 9307772
(43) Date de publication de la demande: 28.12.1994
(73) Titulaire: ETABLISSEMENTS COMPIN Société Anonyme dite:, F-75008 Paris (FR)
(72) Inventeur: Danton, Jean-Louis, F-92100 Boulogne (FR)
(74) Mandataire: Jolly, Jean-Pierre

(56) Documents cités:
- EP-A- 0 300 939
- FR-A- 2 469 894
- NL-A- 7 415 980

## Description

La présente invention a pour objet une structure de lit ou de couchette escamotable dans un plafond.

On sait que l'on a fréquemment recours à des structures de lit ou de couchette escamotables, dans des locaux de dimensions restreintes, par exemple dans des compartiments de chemin de fer, dans des cabines de bateaux et dans des chambres d'hôtel.

En effet, dans des locaux de ce genre, le lit ou la couchette n'est généralement utilisé qu'à titre complémentaire et il doit donc occuper un volume restreint en temps ordinaire, pour n'être amené dans sa position d'utilisation qu'au moment de l'emploi.

Divers types de lits basculants ont été proposés dans ce but. C'est ainsi que la Demanderesse a décrit, dans FR-A-2 469 894, un lit basculant composé de deux éléments latéraux parallèles articulés, comprenant chacun, d'une part, une pièce de support destinée à venir se fixer sur une structure fixe telle qu'un mur, et, d'autre part, une structure basculante articulée sur ladite pièce de support, ces deux éléments latéraux étant solidarisés par une structure plane, telle qu'un panneau de contre-plaqué qui constitue le fond du lit.

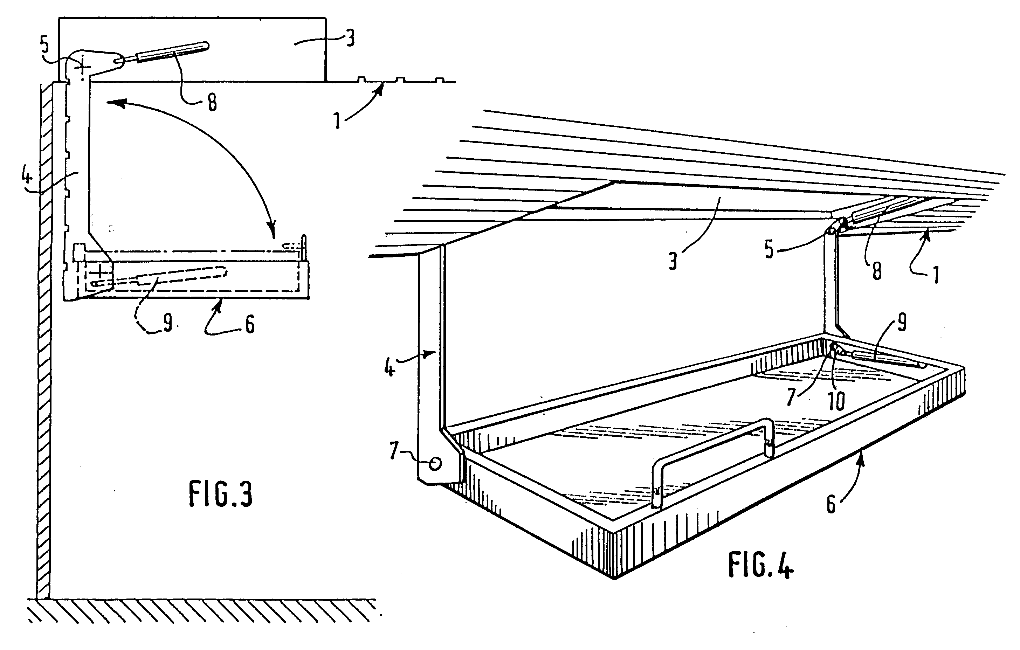

On connaît également, par NL-A-7415980 (voir notamment la figure 3 de ce document), une structure de lit escamotable dans un plafond comprenant, dans le plafond, un évidement ouvert vers le bas et destiné à servir de réceptacle pour les parties mobiles de la structure, la structure comportant une partie formant support pour le lit articulée sur la paroi du plafond par un axe parallèle au plafond. Cette partie support est susceptible d'occuper deux positions, à savoir une première position dans laquelle elle obture en position escamotée l'évidement ménagé dans le plafond, et une seconde position dans laquelle elle fait saillie en dehors de cet évidement (voir la figure 3). Une ossature de lit est articulée sur la partie formant support par un axe de pivotement parallèle à l'axe d'articulation de cette partie support sur l'évidement, cette ossature étant apte à occuper deux positions, à savoir une première position dans laquelle elle est appliquée contre la partie support, et une seconde position dans laquelle cette ossature est en position d'utilisation du lit, parallèlement au plafond. La structure comporte des moyens (un contre-poids) de commande de la partie support et de l'ossature de lit, ces moyens étant aptes à les déplacer depuis leur première position respective jusqu'à leur seconde position, et inversement. La structure comporte aussi des moyens de verrouillage de la partie support et de l'ossature en chacune de leurs positions respectives.

La présente invention vise à répondre aux mêmes exigences, mais en utilisant une structure de lit ou de couchette qui puisse être escamotée dans un plafond.

L'invention a également pour but de proposer une telle structure, qui, en position escamotée, ne nuise pas au décor du local et se confonde avec celui du plafond.

L'invention a enfin pour but de proposer une structure de ce type comportant un mécanisme de commande simple et facile à actionner, ce qui permet de réduire les coûts de fabrication et les frais d'entretien et d'utilisation.

A cet effet, l'invention a pour objet une structure de lit ou de couchette escamotable dans un plafond, caractérisée en ce qu'elle comprend :
- dans le plafond, un évidement ouvert vers le bas et destiné à servir de réceptacle pour les parties mobiles de la structure ;
- articulée sur les parois internes de cet évidement par au moins un axe parallèle au plafond, une partie formant support pour le lit ou la couchette, cette partie étant susceptible d'occuper deux positions, à savoir une première position dans laquelle elle obture en position escamotée le réceptacle ménagé dans le plafond, et une seconde position dans laquelle elle fait saillie en dehors de ce réceptacle;
- articulée sur la partie formant support par au moins un axe de pivotement parallèle à l'axe d'articulation de cette partie sur le réceptacle, une ossature de lit ou de couchette, cette ossature étant apte à occuper deux positions, à savoir une première position, dans laquelle elle est appliquée contre la partie formant support, et une seconde position, dans laquelle l'ossature est disposée à l'horizontale et contigue à une cloison verticale du local à équiper, en position d'utilisation du lit ou de la couchette, parallèlement au plafond;
- des moyens de commande de la partie formant support et de l'ossature de lit ou de couchette, ces moyens étant aptes à les déplacer depuis leur première position respective jusqu'à leur seconde position, et inversement;
- et des moyens de verrouillage en chacune de leurs positions respectives de la partie formant support et de l'ossature de lit ou de couchette;
cette structure de lit ou de couchette étant caractérisée en ce que les axes d'articulation, respectivement, de la partie formant support sur le réceptacle et de l'ossature de lit ou de couchette sur cette partie sont parallèles à la cloison, et en ce que les moyens de commande du déplacement de la partie formant support comprennent au moins un vérin logé dans le réceptacle du plafond et attaquant une partie du support décalée par rapport à son axe de rotation ou un organe rigidement solidaire de cette partie formant support.

Les moyens de commande de l'ossature du lit ou de la couchette pourront comprendre au moins un vérin porté par cette ossature et attaquant une partie de celle-ci décalée par rapport à son axe de pivotement ou un organe rigidement solidaire de cette ossature.

Avantageusement, la face de la partie formant support visible de l'extérieur en position escamotée de la structure comportera le même décor que le plafond et sera située dans le même plan que celui-ci en évitant toute discontinuité, de manière à ne pas altérer la décoration du local et à renforcer l'impression d'escamotage de la structure.

La structure conforme à l'invention constitue donc un ensemble d'une grande simplicité et d'une facilité remarquable d'utilisation.

Une forme de réalisation de cette structure va maintenant être décrite ci-après plus en détail, en référence aux dessins schématiques annexés. Sur ces dessins :
- La figure 1 est une vue verticale, partiellement en coupe, d'un local équipé d'une structure conforme à l'invention en position escamotée ;
- La figure 2 est une vue analogue, avec la structure en saillie par rapport au plafond, mais avec l'ossature de lit ou de couchette repliée contre la partie formant support ;
- La figure 3 est une vue analogue, avec l'ossature de lit ou de couchette en position d'utilisation ;
- La figure 4 est une vue en perspective analogue à la figure 3.

Le local représenté sur les dessins comprend un plafond 1 et une cloison verticale 2, perpendiculairement à laquelle l'ossature de lit ou de couchette est destinée à venir se placer en position d'utilisation.

La structure conforme à l'invention comprend, dans le plafond 1, un évidement 3, contigu à la cloison 2 et destiné à servir d'habitacle pour les parties mobiles de la structure en position escamotée.

Ces parties mobiles comprennent une partie 4 formant support, articulée sur deux parois internes opposées de l'évidement 3 par des axes 5, disposés dans le prolongement l'un de l'autre et parallèles au plafond 1 et à la cloison 2.

Sur cette partie 4, à l'extrémité la plus éloignée de l'évidement 3 lorsque cette partie 4 fait saillie en dehors de l'habitacle, une ossature de lit ou de couchette 6 est articulée par deux axes 7, disposés dans le prolongement l'un de l'autre et parallèles au plafond 1 et à la cloison 2.

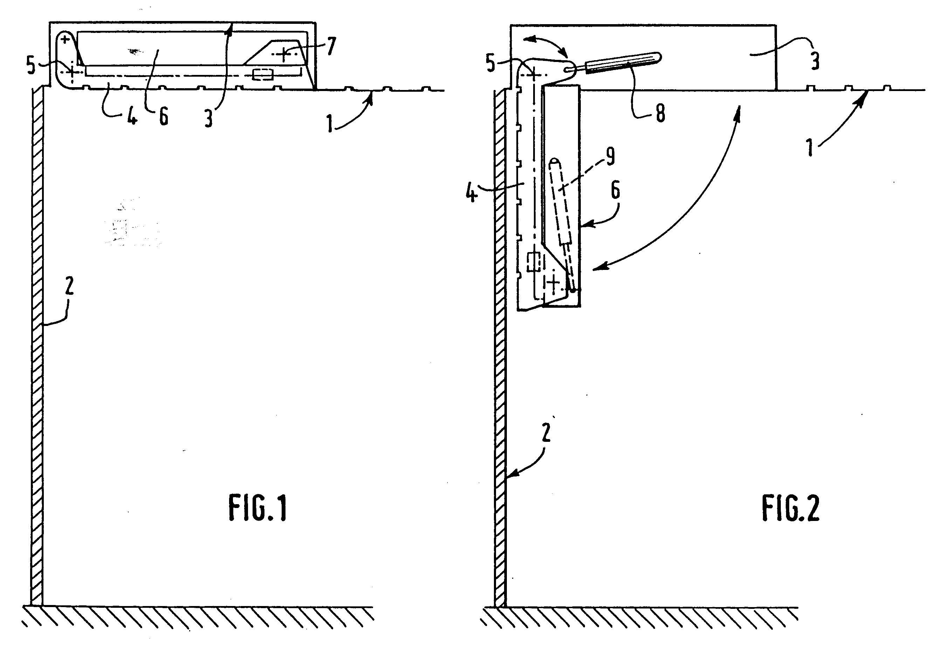

Deux vérins 8, portés par deux parois internes opposées de l'habitacle 6, attaquent chacun par leur piston une portion de la partie 4 formant support décalée par rapport aux axes 5, de manière à pouvoir amener cette partie 4 soit dans une première position (figure 1), où elle obture la partie inférieure de l'évidement 3, soit dans une seconde position (voir figures 2 à 4), où elle fait saillie en dehors de l'évidement 3, parallèlement à la cloison 2.

De façon analogue, deux vérins 9, portés par deux montants d'extrémité opposés de l'ossature 6, attaquent chacun une biellette 10 (voir figure 4) rigidement solidaire de l'ossature 6, de manière à pouvoir amener celle-ci soit dans une première position, où elle est appliquée contre la partie 4 (voir figure 2), soit dans une seconde position ou position d'utilisation, où elle est disposée à l'horizontale, perpendiculairement à cette partie 4 et à la cloison 2 (voir figures 3 et 4).

L'ossature 6 est destinée à recevoir un matelas et des organes de couchage.

Des organes de verrouillage, non représentés sur les dessins, tels que des carrés de verrouillage, sont naturellement prévus pour verrouiller la partie 4 formant support et l'ossature 6 en chacune de leurs positions.

Comme on le voit sur la figure 1, la face de la partie 4 visible de l'extérieur en position escamotée de la structure comporte le même décor que le plafond 1 et est située dans le même plan que celui-ci, pratiquement sans discontinuités. L'observateur a ainsi l'impression de voir un plafond uni, avec lequel se confond la structure de lit ou de couchette.

On notera l'extrême simplicité de ce dispositif et la facilité avec laquelle on peut l'amener à changer de position.

## Revendications

1. Structure de lit ou de couchette escamotable dans un plafond (1), comprenant :
- dans le plafond (1), un évidement (3) ouvert vers le bas et destiné à servir de réceptacle pour les parties mobiles de la structure ;
- articulée sur les parois internes de cet évidement (3) par au moins un axe (5) parallèle au plafond, une partie (4) formant support pour le lit ou la couchette, cette partie (4) étant susceptible d'occuper deux positions, à savoir une première position dans laquelle elle obture en position escamotée l'évidement ménagé dans le plafond, et une seconde position dans laquelle elle fait saillie en dehors de cet évidement
- articulée sur la partie (4) formant support par au moins un axe de pivotement (7) parallèle à l'axe d'articulation (5) de cette partie (4) sur l'évidement (3), une ossature (6) de lit ou de couchette, cette ossature étant apte à occuper deux positions, à savoir une première position, dans laquelle elle est appliquée contre la partie (4) formant support, et une seconde position, dans laquelle cette ossature est disposée à l'horizontale et contigue à une cloison verticale (2) du local à équiper, en position d'utilisation du lit ou de la couchette, parallèlement au plafond;
- des moyens (8,9) de commande de la partie (4) formant support et de l'ossature (6) de lit ou de couchette, ces moyens étant aptes à les déplacer depuis leur première position respective jusqu'à leur seconde position, et inversement;
- et des moyens de verrouillage en chacune de leurs positions respectives de la partie (4) formant support et de l'ossature (6) de lit ou de couchette ;
cette structure de lit ou de couchette étant caractérisée en ce que les axes (5,7) d'articulation, respectivement, de la partie (4) formant support sur l'évidement (3) et de l'ossature (6) de lit ou de couchette sur cette partie (4), sont parallèles à la cloison (2), et en ce que les moyens de commande du déplacement de la partie formant support (4) comprennent au moins un vérin (8), logé à l'intérieur de l'évidement (3) et porté par celui-ci, le pis ton de ce vérin (8) attaquant une portion de cette partie (4) décalée par rapport à son axe de pivotement (5).

2. Structure selon la revendication 1, caractérisée en ce que les moyens de commande du déplacement de l'ossature (6) de lit ou de couchette comprennent au moins un vérin (9), porté par cette ossature et dont le piston attaque une portion de celle-ci décalée par rapport à son axe de pivotement (7).

3. Structure selon l'une des revendications 1 et 2, caractérisée en ce que la face de la partie formant support (4) visible de l'extérieur en position escamotée comporte le même décor que le plafond (1) et est située dans le même plan que celui-ci.

## Claims

1. A bed or couchette assembly which can be retracted into a ceiling (1), comprising:
- in the ceiling (1), a downwardly open recess (3) intended to receive the movable parts of the assembly;
- hinged to the inner walls of said recess (3), by at least one axis (5) parallel to the ceiling, a part (4) forming a support for the bed or couchette, said part (4) being able to assume two positions, i.e. a first position in which, in the retracted position, it fills the recess provided in the ceiling, and a second position in which it projects out of said recess;
- hinged to the part (4) forming a support, by at least one pivot axis (7) parallel to the pivot axis (5) of said part (4) on the recess (3), a bed or couchette frame (6), said frame being adapted to assume two positions, i.e. a first position, in which it is applied against the part (4) forming a support, and a second position in which said frame is disposed horizontally and adjacent a vertical partition (2) of the area in which it is to be installed, in the operative position of the bed or couchette, parallel to the ceiling;
- means (8,9) for controlling the part (4) forming a support and the frame (6) of the bed or couchette, said means being adapted to move them from their respective first position into their second position, and vice versa;
- means for locking in each of their respective positions the part (4) forming a support and the frame (6) of the bed or couchette;
said bed or couchette assembly being characterised in that the pivot axes (5,7) respectively of the part (4) forming a support on the recess (3) and of the frame (6) of the bed or couchette on said part (4) are parallel to the partition (2), and in that the means for controlling the movement of the part (4) forming a support comprise at least one actuator (8) accommodated inside the recess (3) and carried by the latter, the piston of said actuator (8) acting on a portion of said part (4) which is offset with respect to its pivot axis (5).

2. An assembly according to claim 1, characterised in that the means for controlling the movement of the frame (6) of the bed or couchette comprise at least one actuator (9) carried by said frame and the piston of which acts on a portion of the latter which is offset with respect to its pivot axis (7).

3. An assembly according to either claim 1 or claim 2, characterised in that the surface of the part (4) forming a support and visible from the outside in the retracted position comprises the same decoration as the ceiling (1) and is situated in the same plane as the latter.

## Patentansprüche

1. In eine Decke (1) klappbares Bett- oder Liegen-Gestell mit einer in der Decke (1) vorgesehenen Ausnehmung (3), die nach unten offen und zur Aufnahme der beweglichen Teile des Gestells ausgebildet ist, einem Teil (4), der an den nach innen weisenden Wänden der Ausnehmung (3) um mindestens eine Achse (5) parallel zur Decke schwenkbar und zum Tragen des Betts oder der Liege ausgebildet ist, wobei der Tragteil (4) zwei Positionen einnehmen kann, nämlich eine erste Position, in der er in der in der Decke ausgebildeten Ausnehmung verborgen ist, und eine zweite Position, in der er aus der Ausnehmung herauskragt, einem Rahmen (6) für das Bett oder die Liege, der an dem Tragteil (4) um mindestens eine Achse (7) parallel zur innerhalb der Ausnehmung (3) angeordneten Schwenkachse (5) des Tragteils (4) schwenkbar gelagert ist, wobei der Rahmen derart ausgebildet ist, daß er zwei Positionen einnehmen kann, nämlich eine erste Position, in der er gegen den Tragteil (4) geschwenkt ist, und eine zweite Position, in der der Rahmen für die Benutzungsstellung des Betts oder der Liege parallel zur Decke horizontal ausgerichtet und nahe einer vertikalen Wand (2) des mit diesem bzw. dieser auszustattenden Raums angeordnet ist, Organen (8, 9) zum Verstellen des Tragteils und des Bett- oder Liegenrahmens (6), die zum Verschwenken des Tragteils und des Rahmens aus ihrer ersten Position in ihre zweite Position und umgekehrt ausgebildet sind, und Verriegelungselementen zum Sichern des Tragteils (4) und des Bett- oder Liegenrahmens (6) in ihren jeweiligen Positionen, dadurch gekennzeichnet, daß die Schwenkachsen (5, 7) des Tragteils (4) in der Ausnehmung (3) und des Bett- oder Liegenrahmens (6) an dem Tragteil (4) parallel zur Wand (2) angeordnet sind und die Stellorgane für den Tragteil (4) mindestens einen Arbeitszylinder (8) aufweisen, der in der Ausnehmung (3) angeordnet und an dieser gelagert ist, wobei der Kolben des Arbeitszylinders (8) an einer Stelle des Tragteils (4) angreift, die gegenüber der Schwenkachse (5) des Tragteils versetzt ist.

2. Gestell nach Anspruch 1, dadurch gekennzeichnet, daß die Stellorgane zum Verschwenken des Bett- oder Liegenrahmens (6) mindestens einen Arbeitszylinder (9) aufweisen, der an dem Rahmen angeordnet ist und dessen Kolben auf einen Abschnitt wirksam ist, der gegenüber seiner Schwenkachse (7) versetzt ist.

3. Gestell nach einem der Ansprüche 1 und 2, dadurch gekennzeichnet, daß die in der eingeschwenkten Position von außen sichtbare Fläche des Tragteils (4) mit dem gleichen Dekor wie die Decke (1) versehen ist und mit dieser in der gleichen Ebene fluchtet.
